# EUROPÄISCHE PATENTSCHRIFT

(11) **EP 2 942 781 B1**
(45) Veröffentlichungstag und Bekanntmachung des Hinweises auf die Patenterteilung: **01.03.2017**
(21) Anmeldenummer: 15163876.4
(22) Anmeldetag: 16.04.2015
(51) Int. Cl.: G01N 3/42, G12B 5/00

(54) **VORRICHTUNG ZUM POSITIONIEREN UND AUSRICHTEN EINES ROTATIONSSYMMETRISCHEN KÖRPERS**
DEVICE FOR POSITIONING AND ALIGNING A ROTATIONALLY SYMMETRICAL BODY
DISPOSITIF POUR POSITIONNER ET ORIENTER UN CORPS A SYMETRIE DE ROTATION

(30) Priorität: 05.05.2014 DE 102014106242
(43) Veröffentlichungstag der Anmeldung: 11.11.2015
(73) Patentinhaber: Helmut Fischer GmbH Institut für Elektronik und Messtechnik, 71069 Sindelfingen (DE)
(72) Erfinder: Volz, Werner, 71069 Sindelfingen (DE); Thiele, Henry, 71120 Döffingen (DE); Boos, Paul, 72411 Bodelshausen (DE)
(74) Vertreter: Mammel und Maser

(56) Entgegenhaltungen:
- DE-A1- 3 940 432
- DE-U1-202009 018 198

## Beschreibung

Die Erfindung betrifft eine Vorrichtung zum Positionieren und Ausrichten eines rotationssymmetrischen Körpers zu einer Messsonde zur Durchführung einer Messung an dem Körper.

Zur Aufnahme von rotationssymmetrischen Körpern, wie beispielsweise Wellen, ist der Einsatz von Messprismen bekannt, durch welche die Lage des darauf aufliegenden rotationssymmetrischen Körpers fixiert wird. Ein solches Messprisma weist zwei unter einem bestimmten Winkel zueinander ausgerichtete Flächen auf, die einander V-förmig zugeordnet sind, wodurch ein rotationssymmetrischer Körper, wie beispielsweise eine Welle, tangential an jeder der beiden Flächen anliegt. Solche Messprismen ermöglichen zwar, dass die Lage eines rotationssymmetrischen Körpers bezüglich des Messprismas fixiert wird, jedoch ist dadurch eine exakte Positionierung des rotationssymmetrischen Körpers zu einer Messeinrichtung nicht möglich. Insbesondere variiert ein Messpunkt auf dem rotationssymmetrischen Körper in Abhängigkeit des Durchmessers des rotationssymmetrischen Körpers.

Bei einer Härtemessung von Oberflächen auf rotationssymmetrischen Körpern, wie beispielsweise Lackschichten, galvanische Schichten, Hartstoffschichten, Polymer oder von unbeschichteten Plattenmaterialflächen oder dergleichen, werden Härtemessgeräte eingesetzt, wie beispielsweise ein "Fischerscope HM2000 S". Eine solche Härtemesseinrichtung umfasst ein Stativ mit einem Messgehäuse, in welchem ein Indentor als Teil einer Messeinrichtung angeordnet ist. Dieser Indentor ist innerhalb einer Aufsetzfläche eines Zapfens angeordnet. Auf die Aufsetzfläche wird ein plattenförmiges Material aufgelegt und mittels eines Andruckstücks des Stativs auf die Aufsetzfläche gedrückt, um die Messung durchzuführen. Der Indentor wird dabei mit einer vorbestimmten Kraft beaufschlagt und dringt in den Körper ein. Bei rotationssymmetrischen Körpern kann dieser auf der Aufsetzfläche zwar aufliegen, jedoch mit einer hohen Wiederholgenauigkeit nicht exakt zum Indentor ausgerichtet werden, damit der Indentor am höchsten beziehungsweise tiefsten Punkt der Mantelfläche senkrecht zur Achse des Rotationskörpers eindringt, wodurch eine Messung mit Fehler behaftet ist.

Der Erfindung liegt die Aufgabe zugrunde, eine Vorrichtung zum Positionieren und Ausrichten von rotationssymmetrischen Körpern zu einer Messeinrichtung zu schaffen, welche ermöglicht, dass solche rotationssymmetrischen Körper unabhängig von verschiedenen Durchmessern zuverlässig und exakt zur Messeinrichtung positioniert und ausgerichtet wird.

Diese Aufgabe wird durch eine Vorrichtung zum Positionieren und Ausrichten eines rotationssymmetrischen Körpers gelöst, welche ein Basiselement mit einer Aufsetzfläche umfasst, an welcher ein relativ zur Aufsetzfläche verfahrbares Positionierelement vorgesehen ist, das eine prismenförmige Aufnahme umfasst, wobei ein Zapfen mit der Aufsetzfläche innerhalb der prismenförmigen Aufnahme oder daran angrenzend positioniert ist und ein Verfahrweg des Positionierelements zur Aufsetzfläche des Zapfens am Basiselement wenigstens der Höhe der prismenförmigen Aufnahme entspricht. Durch diese Aufnahme wird ermöglicht, dass der rotationssymmetrische Körper durch die prismenförmige Aufnahme in der Lage zum Positionierelement fixiert ist, wobei das Positionierelement in einer definierten Verfahrbewegung zur Aufsetzfläche verfahrbar ist, so dass unabhängig von der Verfahrstrecke zwischen dem Positionierelement zum Basiselement und unabhängig vom Durchmesser des rotationssymmetrischen Körpers der rotationssymmetrische Körper zur Auflage auf der Aufsetzfläche kommt und gleichzeitig durch die prismenförmige Aufnahme lagefixiert ist. Dadurch ist ein fixer Messpunkt oder eine fixe Messebene für eine Messeinrichtung unabhängig von der Größe beziehungsweise dem Durchmesser des rotationssymmetrischen Körpers gegeben, wobei gleichzeitig durch die prismenförmige Aufnahme auch eine Ausrichtung des rotationssymmetrischen Körpers zur Messebene beziehungsweise Aufsetzfläche gegeben ist. Dadurch wird ermöglicht, dass die durchzuführende Messung an dem rotationssymmetrischen Körper am tiefsten beziehungsweise höchsten Punkt erfolgt und somit eine hohe Messqualität aufgrund der Wiederholgenauigkeit gegeben ist.

Bei dieser Vorrichtung ist bevorzugt vorgesehen, dass die prismenförmige Aufnahme des Positionierelements eine Durchgangsbohrung umfasst, innerhalb der sich der Zapfen erstreckt und eine Längsachse des Zapfens am Basiselement in einer Schnittlinie zwischen den einander zugeordneten Flächen oder Flächenabschnitte der prismenförmigen Aufnahme. Dadurch schneidet sich nicht nur die Achse des rotationssymmetrischen Körpers mit der Achse des Zapfens, sondern es entsteht zusätzlich ein fixer Messpunkt zur Aufsetzfläche unabhängig vom Durchmesser des rotationssymmetrischen Körpers.

Eine weitere bevorzugte Ausführungsform der Vorrichtung sieht vor, dass das Positionierelement während einer Verfahrbewegung zum Basiselement beziehungsweise auf das Basiselement durch die Durchgangsbohrung entlang des Zapfens am Basiselement geführt ist. Dies ermöglicht eine einfache und kompakte Bauweise. Bevorzugt ist eine spielfreie Führung zwischen dem Zapfen des Basiselementes und der Durchgangsbohrung des Positionierelementes gegeben. Alternativ oder ergänzend können zwischen dem Positionierelement und dem Basiselement separate Stifte eingebracht werden, die zur Führung dienen, so dass das Positionierelement beispielsweise relativ bezüglich fest im Basiselement eingesetzten Stiften ist. Diese Anordnung kann auch vertauscht sein.

Das Positionierelement wird bevorzugt durch eine gefederte Lagerung in einer Ausgangsposition zum Basiselement gehalten, in welchem die Aufsetzfläche des Zapfens außerhalb der prismenförmigen Aufnahme oder daran angrenzend positioniert ist. Somit kann diese Vorrichtung immer einsatzbereit sein und kehrt nach der Durchführung einer Messung, bei welcher das Positionierelement mittels des rotationssymmetrischen Körpers auf das Basiselement zugeführt wird, in die Ausgangslage wieder zurück. Sofern innerhalb des Zapfens eine Messeinrichtung vorgesehen ist, dient diese gleichzeitig als Schutz einer darin angeordneten Messsonde beziehungsweise Sondenspitze der Messeinrichtung.

Die gefederte Lage umfasst insbesondere eine Bundbuchse, welche an einer Schulter des Positionierelementes anliegt und sich in Richtung auf das Basiselement erstreckt, sowie ein Befestigungselement, welches an einer Schulter des Basiselementes anliegt und mit der Bundbuchse verbunden ist, wobei zwischen dem Positionierelement und dem Basiselement ein Druckfederelement vorgesehen ist. Dadurch kann ein konstruktiv einfacher Aufbau mit einem vorbestimmten und vorzugsweise einstellbaren Hubweg zwischen dem Positionierelement und dem Basiselement geschaffen werden. Gleichzeitig kann durch die Bundbuchse eine Führung oder eine zusätzliche Führung des Positionierelements zum Basiselement erfolgen. Vorzugsweise ist koaxial zur Bundbuchse ein Druckfederelement angeordnet, so dass dieses gleichzeitig geführt ist.

Die prismenförmige Aufnahme am Positionierelement kann durch zwei plane, in einem Winkel zueinander angeordnete Flächen, durch mehrere einander zugeordnete streifenförmige Flächenabschnitte oder durch zwei zueinander angeordnete konvex gekrümmte Flächen ausgebildet sein. Unabhängig der Ausführungsform liegt ein rotationssymmetrischer Körper jeweils tangential an den Flächen oder Flächenabschnitten an und wird zentrisch zur prismenförmigen Aufnahme positioniert.

Eine weitere vorteilhafte Ausführungsform sieht vor, dass an dem Basiselement und Positionierelement jeweils eine Durchgangsbohrung vorgesehen ist, die deckungsgleich zueinander ausgerichtet sowie zur Aufnahme eines Befestigungsmittels zur vorzugsweise lösbaren Fixierung an einer Messeinrichtung vorgesehen sind. Dadurch wird ermöglicht, dass diese Vorrichtung austauschbar an der Messeinrichtung anordenbar ist. Eine Nachrüstung ist ebenfalls möglich. Dadurch wird auch ermöglicht, dass in Abhängigkeit der Messaufgabe beziehungsweise der Geometrie der zu prüfenden Körper entsprechenden Aufnahmevorrichtung zum Positionieren und Ausrichten der zu prüfenden Körper an der Messeinrichtung eingesetzt werden können.

Des Weiteren kann das Basiselement zumindest eine Befestigungsbohrung zur vorzugsweise lösbaren Fixierung in der Messeinrichtung aufweisen. In Abhängigkeit der Zugänglichkeit kann die Fixierung dieser Vorrichtung von unten - also unmittelbar an dem Basiselement - angreifen oder von oben - also über das Positionierelement - erfolgen.

Beim Einsatz dieser Vorrichtung in einer Härtemessvorrichtung ist bevorzugt vorgesehen, dass in der Durchgangsbohrung des Zapfens im Basiselement eine Messsonde der Messeinrichtung anordenbar ist. Beispielsweise kann dies ein Indentor sein. Dabei ist vorteilhafterweise diese Messsonde mit deren Längsachse in der Längsachse des Zapfens angeordnet, um einen fixen Messpunkt zur Aufsetzfläche und zur Schnittlinie der beiden V-förmigen Flächen oder Flächenabschnitte der prismenförmigen Aufnahme beizubehalten.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 eine perspektivische Ansicht einer Härtemessvorrichtung gemäß dem Stand der Technik,
Figur 2 eine perspektivische Ansicht der Härtemessvorrichtung gemäß Figur 1 mit der erfindungsgemäßen Vorrichtung,
Figur 3 eine Explosionsdarstellung der erfindungsgemäßen Vorrichtung,
Figur 4 eine schematische Ansicht von oben auf die Vorrichtung gemäß Figur 3,
Figur 5 eine schematische Schnittansicht entlang der Linie V-V in Figur 4,
Figur 6 eine schematische Schnittansicht entlang der Linie VI-VI in Figur 4,
Figur 7 eine schematische Seitenansicht der Vorrichtung gemäß Figur 3 mit im Durchmesser verschiedenen rotationssymmetrischen Körpern,
Figur 8 eine schematische Schnittansicht einer alternativen Ausführungsform einer prismenförmigen Aufnahme,
Figur 9a eine schematische Schnittansicht einer alternativen Ausführungsform der erfindungsgemäßen Vorrichtung zu Figur 2,
Figur 9b eine weitere schematische Seitenansicht mit Teilschnitt gemäß der Ausführungsform in Figur 9a,
Figur 9c eine schematisch vergrößerte Darstellung des Teilschnitts in Figur 9b und
Figuren 10a bis 10d verschiedene Ansichten einer weiteren alternativen Verwendung der erfindungsgemäßen Vorrichtung zu Figur 2.

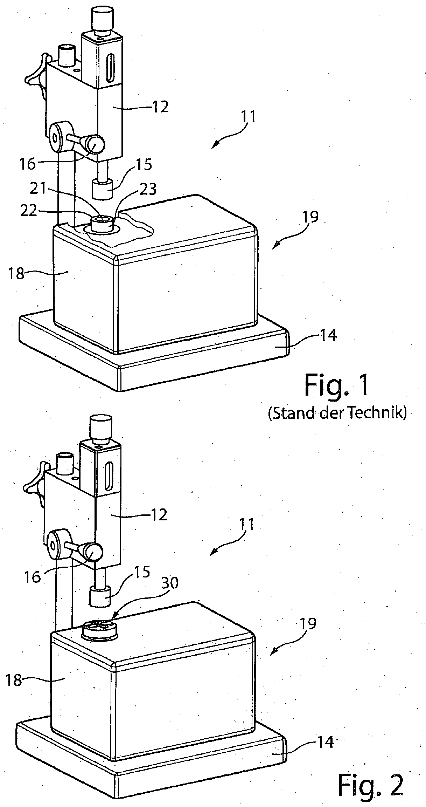

In Figur 1 ist perspektivisch eine Härtemesseinrichtung 11 dargestellt, welche unter der Bezeichnung "FISCHERSCOPE HM2000 S" vertrieben wird. Diese Härtemesseinrichtung 11 umfasst ein Messstativ 12 mit einem Sockel 14 und einem absenkbaren Andruckstück 15, das mittels eines Betätigungshebels 16 absenkbar ist. Auf dem Sockel 14 ist ein Gehäuse 18 mit einer Messeinrichtung 19 angeordnet, von welcher eine Messsonde 21 beziehungsweise deren Spitze sichtbar ist. Diese Messsonde 21 wird von einer Aufsetzfläche 22 an einem Zapfen 23 eines Basiselementes 24 umgeben, welches lösbar an dem Gehäuse 18 befestigt ist. Bei der Messsonde 21 handelt es sich um einen Indentor, welcher nach dem Auflegen eines flachen Messgegenstandes auf der Aufsetzfläche 22 und dem Niederhalt des Messgegenstandes zur Aufsetzfläche 22 mittels dem Andruckstück 15 mit einer vorbestimmten Kraft in die Oberfläche des zu prüfenden Gegenstandes eingepresst wird. Dies erfolgt durch eine nicht näher dargestellte Krafterzeugungseinrichtung der Messeinrichtung 19 im Gehäuse 18. Über ein ebenfalls nicht dargestelltes Wegmesssystem der Messeinrichtung 19 wird die Eindringtiefe bestimmt, woraus im Zusammenhang mit der Geometrie des Eindringkörpers des Indentors der dazugehörige Härtewert mit einer nicht näher dargestellten Datenverarbeitungseinrichtung ermittelt wird. Daraus können weitere Materialiengrößen ermittelt und ausgegeben werden.

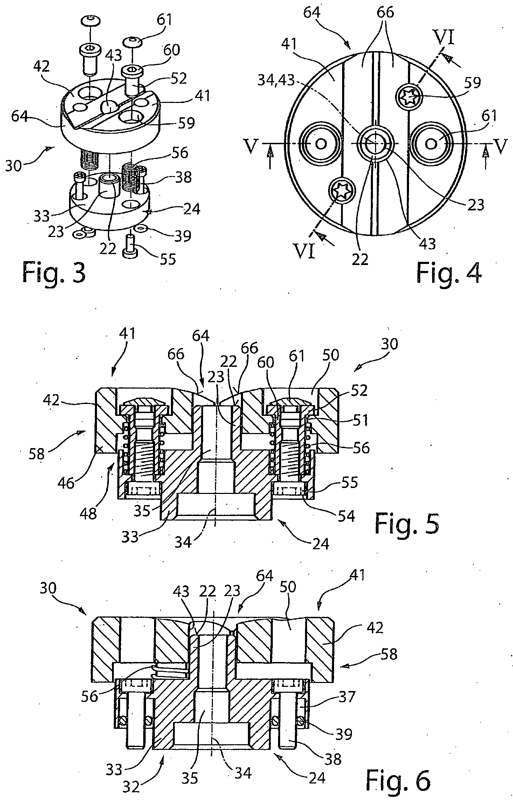

In Figur 2 ist die Härtemesseinrichtung 11 gemäß Figur 1 dargestellt, bei welcher zur Messung von rotationssymmetrischen Körpern 28 (siehe Figur 4) eine erfindungsgemäße Vorrichtung 30 zum Positionieren und Ausrichten des rotationssymmetrischen Körpers 28 zur Messsonde 21 der Messeinrichtung 19 vorgesehen ist. Diese erfindungsgemäße Vorrichtung 30 wird nachfolgend in den Figuren 3 bis 6 näher beschrieben.

In Figur 3 ist eine Explosionsdarstellung der Vorrichtung 30 dargestellt. Daraus gehen die einzelnen Komponenten dieser erfindungsgemäßen Vorrichtung 30 hervor. Figur 4 zeigt eine Draufsicht 5 sowie die Figuren 5 und 6 jeweils eine Schnittansicht der Vorrichtung 30 gemäß Figur 4.

Diese Vorrichtung 30 umfasst ein Basiselement 24, welches beispielsweise als ein rotationssymmetrisches Teil, insbesondere ein Fräs- oder Drehteil, ausgebildet sein kann. Dieses umfasst einen scheibenförmigen Grundkörper 33, an welchem der Zapfen 23 hervorstehend angeordnet ist, an dessen Stirnseite die Aufsetzfläche 22 ausgebildet ist. Dieser Zapfen 23 ist fest und vorzugsweise in der Längsmittelachse 34 des Basiselementes 24 vorgesehen. Entlang der Längsmittelachse 34 erstreckt sich in dem Zapfen 23 eine Durchgangsbohrung 35, welche beispielsweise gestuft ausgebildet sein kann. Innerhalb dieser Durchgangsbohrung 35 kann die Messsonde 21 angeordnet und/oder fixiert sein. Das Basiselement 24 weist des Weiteren Durchgangsbohrungen 37 auf, in welches Befestigungsschrauben 38 einsetzbar sind, so dass die Vorrichtung 30 über diese Befestigungsschrauben 38 beispielsweise an dem Gehäuse 18 der Messeinrichtung 19 befestigbar ist. Vorteilhafterweise ist an den Befestigungsschrauben 38 jeweils ein O-Ring 39 vorgesehen, so dass diese nicht aus den Bohrungen 37 herausfallen können.

Dem Basiselement 24 ist ein Positionierelement 41 zugeordnet. Dieses Positionierelement 41 weist vorteilhafterweise einen scheibenförmigen Grundkörper 42 auf. Zur Positionierung des Positionierelementes 41 zum Basiselement 24 ist bevorzugt eine zentrale Durchgangsbohrung 43 vorgesehen, welche den Zapfen 23 umgibt, wobei zwischen der Durchgangsbohrung 43 und dem Zapfen 23 vorteilhafterweise eine Passung vorgesehen ist, so dass das Positionierelement 41 zentrisch und insbesondere spielfrei zum Basiselement 24 gelagert ist. Alternativ oder ergänzend können weitere Führungselemente vorgesehen sein. In einer einfachen Form können Passstifte in dem Basiselement 24 oder Positionierelement 41 vorgesehen sein, welche in entsprechenden Bohrungen gelagert und geführt sind. Die Durchgangsbohrung 43 ist bevorzugt zentrisch zur Längsmittelachse 44 des Positionierelementes 42 angeordnet.

Das Positionierelement 41 weist ein zum Basiselement 24 weisenden Ringbund 46 auf, der einen Außenumfang des Basiselements 24 umgreift. Dadurch kann eine zusätzliche verkippungsfreie Führung des relativ zum Basiselement 24 bewegbaren Positionierelementes 41 ermöglicht sein. Das Positionierelement 41 ist durch eine gefederte Lagerung 48 zum Basiselement 24 positioniert. In einer Bohrung 50 des Positionierelementes 41 greift an einer Schulter 51 eine Bundbuchse 52 an, die sich in Richtung auf das Basiselement 24 erstreckt. In dem Basiselement 24 ist zur Bohrung 50 fluchtend eine weitere Bohrung 54 vorgesehen, in welcher ein Befestigungsmittel, insbesondere Befestigungsschrauben 55, einsetzbar ist und in der Bundbuchse 52 eingreift. Zwischen dem Basiselement 24 und dem Positionierelement 41 ist eine Druckfeder 56 vorgesehen, welche das Positionierelement 41 in einer Ausgangsposition 58 zum Basiselement 24 positioniert. Die Druckfeder 56 ist bevorzugt koaxial zur Bundbuchse 52 angeordnet. Auf einen Kopf 60 der Bundbuchse 52 ist bevorzugt eine Kappe 61 angeordnet, um eine Betätigung der Bundbuchse 52 zum Lösen der Schraubverbindung mit der Befestigungsschraube 55 zu verhindern.

Das Positionierelement 41 umfasst des Weiteren eine prismenförmige Aufnahme 64, welche gemäß dem ersten Ausführungsbeispiel durch zwei einander zugeordnete Flächen 66 gebildet ist. Diese Flächen 66 sind beispielsweise konvex gekrümmt. Alternativ können diese Flächen 66 auch plan ausgebildet sein. Die Schnittlinie der beiden Flächen 66 kreuzt die Längsmittelachse 34 der Durchgangsbohrung 35 beziehungsweise die Längsmittelachse 34 der Durchgangsbohrung 43, wobei die Längsmittelachse 44 und die Längsmittelachse 43 ineinander liegen und vorzugsweise die Längsmittelachse des Basiselementes 24 und des Positionierelementes 41 bilden.

In einer Ausgangsposition 58 ist das Positionierelement 41 mit deren Aufnahme 64 derart zur Aufsetzfläche 22 am Basiselement 24 positioniert, so dass diese im Schnittpunkt der Flächen 66 der prismenförmigen Aufnahme 64 oder außerhalb der Aufnahme 64 liegt. Dadurch ist die Aufsetzfläche 22 als fixe Messfläche geschützt. Dies gilt auch für eine gegebenenfalls in der Durchgangsbohrung 35 des Basiselementes 24 eingesetzte Messsonde 21 einer Messeinrichtung.

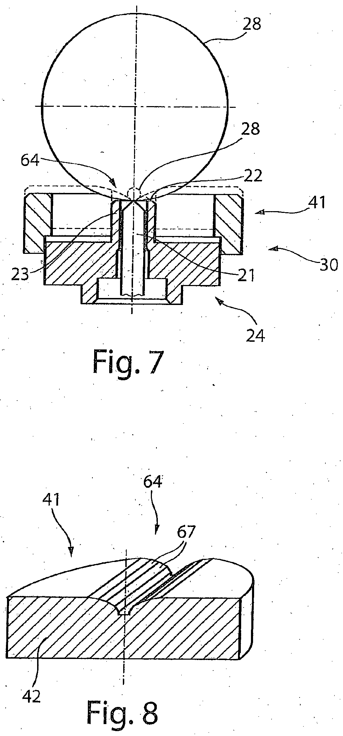

In Figur 7 ist eine schematische Seitenansicht der Vorrichtung 30 mit zwei im Querschnitt unterschiedlich groß ausgebildeten rotationssymmetrischen Körpern 28 dargestellt, um darzulegen, dass unabhängig des Querschnitts oder des Durchmessers vom rotationssymmetrischen Körper 28 durch die Aufsetzfläche 22 einerseits und der Zuordnung der prismenförmigen Aufnahme 64 mittels dem Positionierelement 41 andererseits ein fixer Messpunkt für die Messsonde 21 im Zapfen 24 gegeben ist. Aufgrund der unterschiedlichen Größe bzw. Durchmesser des rotationssymmetrischen Körpers 28 ändert sich lediglich der Verfahrweg des Positionierelements 41 aus der Ausgangsposition 58 in Richtung auf das Basiselement 24. Jedoch kommt in beiden Fällen der rotationssymmetrische Körper 28 einerseits auf der Aufsetzfläche 22 zur Anlage und bleibt andererseits gleichzeitig in der prismenförmigen Aufnahme 64 in der Lage fixiert. Dadurch kann am Scheitelpunkt des rotationssymmetrischen Körpers 28 die Messung durchgeführt werden.

In Figur 8 ist eine alternative Ausführungsform der prismenförmigen Aufnahme 64 dargestellt. Die einander zugeordneten Flächen 66 werden beispielsweise durch streifenförmige Flächenabschnitte 67 gebildet, die in jeweils voneinander abweichenden Winkeln aneinander gereiht sind. Dadurch kann ebenfalls eine exakte Ausrichtung des rotationssymmetrischen Körpers 28 ermöglicht sein.

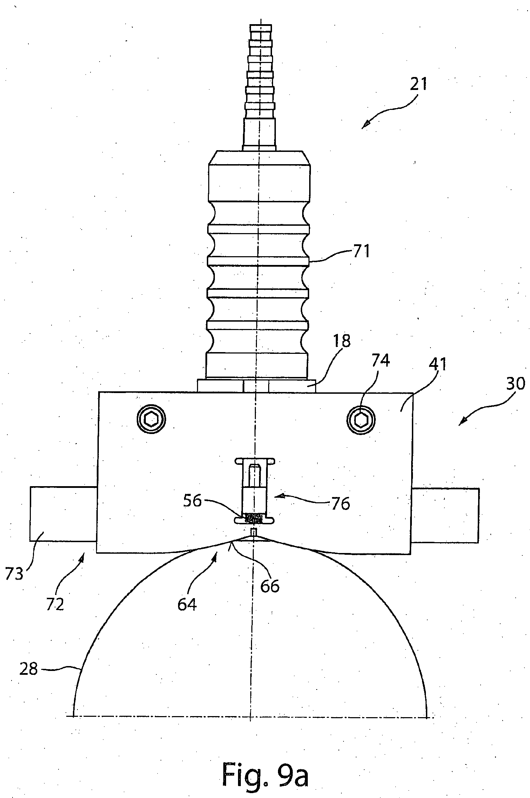

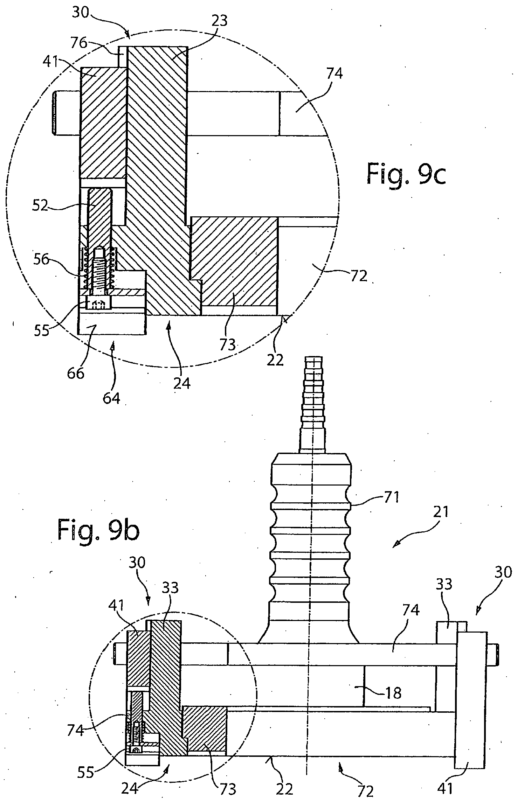

Die Figur 9a zeigt eine schematische Seitenansicht einer alternativen Ausführungsform der erfindungsgemäßen Vorrichtung 30. Figur 9b zeigt eine weitere Seitenansicht mit einem Teilschnitt der Vorrichtung 30 und Figur 9c zeigt eine vergrößerte Abbildung des Teilschnitts in Figur 9b. Die in Figur 9a und 9b schematisch dargestellte Messeinrichtung 19 umfasst eine Messsonde 21, die an einem Gehäuse 18 mit einem Handgriff 71 zum Führen der Messsonde 21 vorgesehen ist. Die Messsonde 21 weist einen Sondenkopf 72 auf, der ein gegenüber einem Handgriff 71 großen Durchmesser aufweist. Im Sondenkopf 72 ist beispielsweise zumindest eine Spule vorgesehen, um eine Schichtdickenmessung nach einem magnetinduktiven, magnetischen Verfahren bzw. Wirbelstromverfahren durchzuführen. Ebenso kann ein Hall-Sensor vorgesehen sein. Auf dem Sondenkopf 72 ist das Basiselement 24 der Vorrichtung 30 befestigt. Der Sondenkopf 72 ist bei dieser Ausführungsform scheibenförmig ausgebildet. Das Basiselement 24 ist an einem ringförmigen Spannelement 73 befestigt, der ein Außenumfang des Sondenkopfes 72 umgibt und auf diesen aufspannbar ist. Das Basiselement 24 umfasst des Weiteren anstelle eines Zapfens 23 zumindest ein Führungselement 76, der die selbe Funktion wie der Zapfen 23 gemäß den vorbeschriebenen Ausführungsformen aufweist. Entlang des Führungselements 76 ist das Positionierelement 41 verfahrbar aufgenommen. Dabei kann das zwischen dem Basiselement 24 und Positionierelement 41 angeordnete Führungselement 76 rechteckförmig, schwalbenschwanzförmig oder dergleichen vorgesehen sein, damit das Positionierelement 41 gegenüber der Aufsetzfläche 22 der Messsonde 21 auf- und abbewegbar und verfahrbar ist. Die bewegbare Anordnung des Positionierelementes 41 zum Basiselement 24 ist analog den vorbeschriebenen Ausführungsformen. Das Positionierelement 41 ist plattenförmig ausgebildet, welches an einer unteren Stirnseite die prismenförmige Aufnahme 64 aufweist.

Innerhalb der V-förmigen Vertiefung der Aufnahme 64 ist die Befestigungsschraube 55 vorgesehen, um das Positionierelement 41 federgelagert zum Basiselement 24 verfahrbar aufzunehmen. Die beiden einander gegenüberliegende Positionierelemenete 41 sind bevorzugt durch Befestigungselemente 74 wie beispielsweise Spannschrauben zueinander positioniert und fixiert, so dass diese beiden parallel zueinander und auch senkrecht zur Aufsetzfläche 22 verfahrbar sind. Beim Aufsetzen der Messsonde 21 auf rotationssymmetrischen Körpern 28, wie beispielsweise Pipeline-Rohren, Rohrleitungen (beschichtet, unbeschichtet), Wasserleitungen oder dergleichen, erfolgt eine Positionierung der Messsonde 21 über die Aufnahme 64 am Außenumfang solcher rotationssymmetrischen Körper 28, wobei durch Niederdrücken der Messsonde 21 in Richtung auf den rotationssymmetrischen Körper 28 wiederum die Aufsetzfläche 22 zur Anlage am Außenumfang des rotationssymmetrischen Körpers 28 erfolgt, wodurch wiederum ein fixer Messpunkt gegeben ist. Das Positionierelement 41 muss parallel zum Sondenkopf 72 geführt sein, beziehungsweise das Positionierelement 41 muss senkrecht zur Aufsetzfläche 22 der Messsonde 21 ausgerichtet sein.

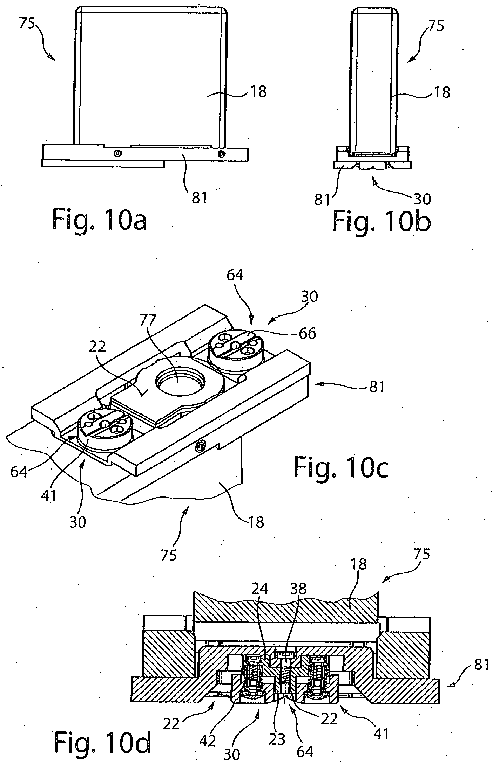

In den Figuren 10a bis 10d ist eine weitere alternative Verwendung der erfindungsgemäßen Vorrichtung 30 dargestellt. Die Figuren 10a und 10b zeigen jeweils eine schematische Seitenansicht einer Röntgenfluoreszenzmesseinrichtung 75, welche beispielsweise als ein mobiles Gerät oder ein Handgerät ausgebildet ist. In dem Gehäuse 18 der Röntgenfluoreszenzmesseinrichtung 75 ist nicht näher dargestellt eine Strahlungsquelle zur Ausgabe eines Primärstrahls sowie ein Detektor zur Erfassung einer von einer Messoberfläche emittierten Sekundärstrahlung vorgesehen. Des Weiteren umfasst die Röntgenfluoreszenzmesseinrichtung 75 eine Auswerteeinrichtung bezüglich der erfassten Sekundärstrahlung.

In Figur 10c ist eine Unterseite der Röntgenfluoreszenzmesseinrichtung 75 dargestellt, welche eine Austrittsöffnung 77 zeigt, aus welcher der Primärstrahl austreten und ein an der Messoberfläche emittierter Sekundärstrahl wieder in das Gehäuse 18 eintreten kann. Diese Austrittsöffnung 77 ist von einer Aufsetzfläche 22 umgeben. Zur lagerichtigen Positionierung dieser Röntgenfluoreszenzmesseinrichtung 75 ist benachbart zur Austrittsöffnung 77 zumindest eine erfindungsgemäße Vorrichtung 30 vorgesehen, wobei gemäß dem Ausführungsbeispiel in Figur 10c beidseitig zur Aufsetzfläche 24 jeweils eine Vorrichtung 30 angeordnet ist.

Diese Vorrichtung 30 kann beispielsweise an einem Aufsetzrahmen 81 montiert sein, wie dies in Figur 10d hervorgeht oder ist dieser Aufsetzrahmen 81 kann lösbar am Gehäuse 18 der Röntgenfluoreszenzmesseinrichtung 75 vorgesehen sein.

Bei dieser Ausführungsform ist vorgesehen, dass die Aufsetzfläche 22 an die prismenförmige Aufnahme 64 angrenzend oder außerhalb des Positionierelementes 41 angeordnet ist, wobei die Lage bzw. die Höhe der Aufsetzfläche 22 im Verhältnis zur prismenförmigen Auflage 64 der gemäß dem Ausführungsbeispiel in den Figuren 3 bis 6 entspricht. Alternativ oder zusätzlich kann die Vorrichtung 30 ebenso mit der Aufsetzfläche 22 an dem Zapfen 23 versehen sein, wobei dann die Lage der Aufsetzfläche 22 am Zapfen 23 und die Messebene der Röntgenfluoreszenzmesseinrichtung 75 aufeinander abgestimmt und eingestellt sind.

Zusätzlich kann entfernt von der Austrittsöffnung 77 als Hilfspol eine weitere Vorrichtung 30 am Gehäuse vorgesehen sein, so dass das Gehäuse 18 der Röntgenfluoreszenzmesseinrichtung 75 bezüglich deren gesamten Länge zu einem rotationssymmetrischen Körper 28 ausgerichtet wird.

## Patentansprüche

1. Vorrichtung zum Positionieren und Ausrichten eines rotationssymmetrischen Körpers (28) zu einer Messeinrichtung (19) zur Durchführung einer Messung an dem rotationssymmetrischen Körper (28), mit einem Basiselement (24), welches an einem Zapfen (23) eine Aufsetzfläche (22) aufweist oder einer Aufsetzfläche (22) zugeordnet ist, auf welcher der rotationssymmetrische Körper (28) zur Durchführung der Messung aufliegt, **dadurch gekennzeichnet, dass** an dem Basiselement (24) ein relativ zur Aufsetzfläche (22) verfahrbares Positionierelement (41) vorgesehen ist, welches eine prismenförmige Aufnahme (64) umfasst, wobei die Aufsetzfläche (22) innerhalb der prismenförmigen Aufnahme (64) oder daran angrenzend positioniert ist und ein Verfahrweg des Positionierelements (41) zum Basiselement (22) wenigstens der Höhe der prismenförmigen Aufnahme (64) entspricht.

2. Vorrichtung nach Anspruch 1, **dadurch gekennzeichnet, dass** die prismenförmige Aufnahme (64) des Positionierelementes (41) eine Durchgangsbohrung (43) aufweist, innerhalb der sich der Zapfen (23) erstreckt und eine Längsachse des Zapfens (23) am Basiselement (24) in einer Schnittlinie der einander zugeordneten Flächen (66) oder Flächenabschnitte der prismenförmigen Aufnahme (64) liegt.

3. Vorrichtung nach Anspruch 1, **dadurch gekennzeichnet, dass** das Positionierelement (41) während einer Verfahrbewegung zum Basiselement (24) durch die Durchgangsbohrung (43) zum Zapfen (23), insbesondere spielfrei, geführt ist.

4. Vorrichtung nach Anspruch 1, **dadurch gekennzeichnet, dass** das Positionierelement (41) durch eine gefederte Lagerung (48) in einer Ausgangsposition (58) zum Basiselement (24) positioniert ist, in welchem die Aufsetzfläche (22) des Zapfens (23) außerhalb der prismenförmigen Aufnahme (64) oder daran angrenzend positioniert ist.

5. Vorrichtung nach Anspruch 4, **dadurch gekennzeichnet, dass** die gefederte Lagerung (48) eine Bundbuchse (52) umfasst, welche an einer Schulter (51) in einer Bohrung (50) des Positionierelementes (41) anliegt und sich in Richtung zum Basiselement (24) erstreckt sowie ein Befestigungselement (55) umfasst, welches an einer Schulter (51) der Bohrung (54) am Basiselement (24) anliegt und mit der Bundbuchse (52) verbunden ist sowie zwischen dem Positionselement (41) und dem Basiselement (24) zumindest eine Druckfeder (56) vorzugsweise koaxial zur Bundbuchse (52), angeordnet ist.

6. Vorrichtung nach Anspruch 1, **dadurch gekennzeichnet, dass** die prismenförmige Aufnahme (64) durch zwei plane oder durch zwei einander zugeordnete konvex gekrümmte Flächen (66)oder durch mehrere einander zugeordnete streifenförmigen Flächenabschnitte (67) ausgebildet ist.

7. Vorrichtung nach Anspruch 1, **dadurch gekennzeichnet, dass** an dem Basiselement (24) und dem Positionierelement (41) jeweils eine Durchgangsbohrung (34, 59) vorgesehen ist, die deckungsgleich zueinander angeordnet sind und zur Aufnahme eines Befestigungsmittels (38) zur vorzugsweise lösbaren Fixierung an der Messeinrichtung (19) vorgesehen sind.

8. Vorrichtung nach Anspruch 1, **dadurch gekennzeichnet, dass** das Basiselement (24) zumindest eine Durchgangsbohrung (35) zur Aufnahme eines Befestigungsmittels (38) zur vorzugsweise lösbaren Fixierung an der Messeinrichtung (19) aufweist.

9. Verwendung der Vorrichtung nach einem der Ansprüche 1 bis 7, **dadurch gekennzeichnet, dass** die Vorrichtung (30) an einem Gehäuse (18) einer HärteMesseinrichtung (11) zur Positionierung des rotationssymmetrischen Körpers (28) anordenbar ist.

10. Verwendung der Vorrichtung nach einem der Ansprüche 1 bis 8, **dadurch gekennzeichnet, dass** die Vorrichtung (30) an einem Gehäuse (18) einer mobilen Röntgenfluoreszenzeinrichtung (75) zum Positionieren des rotationssymmetrischen Körpers (28) in einer Messebene eines vorzugsweise fokussierten, Röntgenfluoreszenzstrahles vorgesehen ist.

11. Verwendung der Vorrichtung nach einem der Ansprüche 1 bis 8, **dadurch gekennzeichnet, dass** die Vorrichtung (30) an einem Gehäuse (18) einer Messsonde (21) zur taktilen Messung der Dicke dünner Schichten auf dem rotationssymmetrischen Körper (28) anordenbar ist.

## Claims

1. Device to position and align a rotationally-symmetrical body (28) with respect to a measuring device (19) for the implementation of a measurement on the rotationally-symmetrical body (28), having a basic element (24) which has a contact surface (22) on a pin (23) or is allocated to a contact surface (22), on which the rotationally-symmetrical body (28) is supported to implement the measurement, **characterised in that** a positioning element (41) which is moveable relative to the contact surface (22) is provided on the basic element (24) which comprises a prismatic receiver (64), wherein the contact surface (22) is positioned within the prismatic receiver (64) or abutting onto this and a movement path of the positioning element (41) towards the basic element (22) corresponds at least to the height of the prismatic receiver (64).

2. Device according to claim 1, **characterised in that** the prismatic receiver (64) of the positioning element (41) has a through-bore (43) within which the pin (23) extends, and a longitudinal axis of the pin (23) lies on the basic element (24) in an intersection of the surfaces (66) or surface sections of the prismatic receiver (64) which are allocated to one another.

3. Device according to claim 1, **characterised in that** the positioning element (41) is guided through the through-bore (43) to the pin (23), in particular without clearance, during a movement towards the basic element (24).

4. Device according to claim 1, **characterised in that** the positioning element (41) is positioned by a sprung mounting (48) in an initial position (58) with respect to the basic element (24), in which the contact surface (22) of the pin (23) is positioned outside the prismatic receiver (64) or abutting onto this.

5. Device according to claim 4, **characterised in that** the sprung mounting (48) comprises a flange bushing (52) which abuts on a shoulder (51) in a bore (50) of the positioning element (41) and extends in the direction of the basic element (24) and comprises a fastening element which abuts on a shoulder (51) of the bore (54) on the basic element (24) and is connected to the flange bushing (52) and at least one compression spring (56) is arranged between the positioning element (41) and the basic element (24), preferably coaxially with respect to the flange bushing (52).

6. Device according to claim 1, **characterised in that** the prismatic receiver (64) is formed by two flat surfaces (66) or by two convexly curved surfaces (66) which are allocated to each other or by several strip-shaped surface sections (67) which are allocated to one another other.

7. Device according to claim 1, **characterised in that** a respective through-bore (34, 59) is provided on the basic element (24) and the positioning element (41), which are arranged congruently with respect to each other and are provided to receive a fixing means (38) for the preferably releasable fixing on the measuring device (19).

8. Device according to claim 1, **characterised in that** the basic element (24) has at least one through-bore (35) to receive a fixing means (38) for the preferably releasable fixing on the measuring device (19).

9. Use of the device according to one of claims 1 to 7, **characterised in that** the device (30) is able to be arranged on a housing (18) of a hardness measuring device (11) to position the rotationally-symmetrical body (28).

10. Use of the device according to one of claims 1 to 8, **characterised in that** the device (30) is provided on a housing (18) of a mobile X-ray fluorescence device (75) to position the rotationally-symmetrical body (28) in a measuring plane of a preferably focused X-ray fluorescence beam.

11. Use of the device according to one of claims 1 to 8, **characterised in that** the device (30) is able to be arranged on a housing (18) of a measuring probe (21) for the tactile measurement of the thickness of thin layers on the rotationally-symmetrical body (28).

## Revendications

1. Dispositif destiné à positionner et à orienter un corps à symétrie de rotation (28) par rapport à un dispositif de mesure (19) destiné à effectuer une mesure sur le corps à symétrie de rotation (28), avec un élément de base (24) qui présente, sur un tenon (23), une surface de placement (22) ou qui est affecté à une surface de placement (22) sur laquelle repose le corps à symétrie de rotation (28) afin que soit effectuée la mesure, **caractérisé en ce que** sur l'élément de base (24) est prévu un élément de positionnement (41) qui peut être déplacé par rapport à la surface de placement (22) et qui comprend une réception (64) en forme de prisme, la surface de placement (22) étant positionnée à l'intérieur de la réception (64) en forme de prisme ou de manière contiguë à celle-ci, et une distance de déplacement de l'élément de positionnement (41) par rapport à l'élément de base (22) correspondant au moins à la hauteur de la réception (64) en forme de prisme.

2. Dispositif selon la revendication 1, **caractérisé en ce que** la réception (64) en forme de prisme de l'élément de positionnement (41) présente un trou de passage (43) à l'intérieur duquel s'étend le tenon (23), et **en ce qu'**un axe longitudinal du tenon (23) est situé sur l'élément de base (24) dans une ligne de coupe des surfaces (66) ou parties de surface affectées l'une à l'autre de la réception (64) en forme de prisme.

3. Dispositif selon la revendication 1, **caractérisé en ce que** l'élément de positionnement (41), alors qu'il effectue un mouvement de déplacement vers l'élément de base (24), est guidé, en particulier sans jeu, par rapport au tenon (23) grâce au trou de passage (43).

4. Dispositif selon la revendication 1, **caractérisé en ce que** l'élément de positionnement (41) est mis, grâce à une suspension à ressort (48), dans une position initiale (58) par rapport à l'élément de base (24) dans lequel la surface de placement (22) du tenon (23) est positionnée à l'extérieur de la réception (64) en forme de prisme ou de manière contiguë à celle-ci.

5. Dispositif selon la revendication 4, **caractérisé en ce que** la suspension à ressort (48) comprend une douille à collet (52) qui repose sur un épaulement (51) situé dans un alésage (50) de l'élément de positionnement (41) et qui s'étend en direction de l'élément de base (24), et que ladite suspension comprend, en outre, un élément de fixation (55) qui repose contre un épaulement (51) de l'alésage (54) ménagé dans l'élément de base (24) et qui est relié à la douille à collet (52), et **en ce qu'**au moins un ressort de compression (56) est disposé entre l'élément de positionnement (41) et l'élément de base (24) de préférence de manière coaxiale à la douille à collet (52).

6. Dispositif selon la revendication 1, **caractérisé en ce que** la réception (64) en forme de prisme est formée par deux surfaces (66) planes ou incurvées de manière convexe, affectées l'une à l'autre, ou par plusieurs parties de surface (67) en forme de bande, affectées les unes aux autres.

7. Dispositif selon la revendication 1, **caractérisé en ce que** sur l'élément de base (24) et sur l'élément de positionnement (41) est prévu respectivement un trou de passage (34, 59) lesquels sont disposés l'un par rapport à l'autre de manière à coïncider et qui sont prévus pour recevoir un moyen de fixation (38) destiné à assurer une fixation de préférence amovible sur le dispositif de mesure (19).

8. Dispositif selon la revendication 1, **caractérisé en ce que** l'élément de base (24) présente au moins un trou de passage (35) destiné à recevoir un moyen de fixation (38) destiné à assurer une fixation de préférence amovible sur le dispositif de mesure (19).

9. Utilisation du dispositif selon l'une quelconque des revendications 1 à 7, **caractérisée en ce que** le dispositif (30) peut être disposé sur un boîtier (18) d'un dispositif de mesure de dureté (11) en vue de positionner le corps à symétrie de rotation (28).

10. Utilisation du dispositif selon l'une quelconque des revendications 1 à 8, **caractérisée en ce que** le dispositif (30) peut être disposé sur un boîtier (18) d'un dispositif à fluorescence de rayons X (75) mobile en vue de positionner le corps à symétrie de rotation (28) dans un plan de mesure d'un rayon à fluorescence X, de préférence focalisé.

11. Utilisation du dispositif selon l'une quelconque des revendications 1 à 8, **caractérisée en ce que** le dispositif (30) peut être disposé sur un boîtier (18) d'une sonde de mesure (21) destinée à effectuer la mesure tactile de l'épaisseur de couches minces sur le corps à symétrie de rotation (28).
